# EUROPÄISCHE PATENTSCHRIFT

(11) **EP 1 093 007 B1**
(45) Veröffentlichungstag und Bekanntmachung des Hinweises auf die Patenterteilung: **28.12.2005**
(21) Anmeldenummer: 00118712.9
(22) Anmeldetag: 30.08.2000
(51) Int. Cl.: G02C 5/00

(54) **Halbzeug, insbesondere Draht für Brillengestelle**
Semi-finished product, particularly wire for spectacle frame
Produit semi-fini, en particulier fil pour monture de lunettes

(30) Priorität: 12.10.1999 DE 19949114
(43) Veröffentlichungstag der Anmeldung: 18.04.2001
(73) Patentinhaber: Berkenhoff GmbH, 35452 Heuchelheim (DE)
(72) Erfinder: Tauber, Klaus, 35444 Biebertal (DE); Schütz, Jürgen, 35630 Ehringshausen (DE); Schmid, Eberhard, Dr., 63755 Alzenau (DE); Dietrich, Bernd, 35745 Herborn-Merkenbach (DE)
(74) Vertreter: Böck, Bernhard

(56) Entgegenhaltungen:
- EP-A- 0 545 231
- DE-A- 593 783
- DE-A- 4 234 888
- DE-A- 4 314 625
- DE-C- 593 783
- DE-C- 4 224 280
- DE-C- 4 314 625

## Beschreibung

Die Erfindung betrifft einen Draht für Brillengestelle aus einer CuTi-Legierung.

Die derzeitig bevorzugten Drähte für die Herstellung von Brillengestellen haben regelmäßig einen Nickelanteil. Dieser Nickelanteil führt zu vorteilhaften Verarbeitungseigenschaften des Drahtes. So ist der Draht insbesondere flussmittelfrei lötbar und auch schweißbar. Nickel hat jedoch den Nachteil, dass es beim Menschen Allergien auslösen kann. Daher bestehen fUr die Nickelemission insbesondere bei Brillengestellen strenge Grenzwerte, die nur mit besonderem Aufwand einzuhalten sind.

Drähte fUr Brillenteile, die aus einer nickelfreien CuTiFe-, CuTiZn- oder CuTiMg-Legierung bestehen, sind beispielsweise in der Patentschrift DE-C1-43 14 625 beschrieben.

Der Erfindung liegt daher die Aufgabe zugrunde, einen Draht vorzuschlagen, welcher kein Nickel enthält, jedoch zumindest die gleichen guten Verarbeitungseigenschaften wie ein nickelhaltiger Draht hat, hohe Festigkeitswerte und gute Federeigenschaften aufweist und zusätzlich warmfest ist. Diese Aufgabe wird erfindungsgemäß dadurch gelöst, dass der Draht aushärtbar ist und aus 2 bis 5 Gew.-% Ti, 0,5 bis 10 Gew.-% Mn und Rest Cu besteht.

Ein derartiger Draht, insbesondere ein Draht kann mittels einer abschließenden Wärmebehandlung ausgehärtet werden. Hierdurch werden Festigkeitswerte von mehr als 1000 ^{N} /ₘₘ ² erreicht. Gleichzeitig erhält man ein Material mit hoher Streckgrenze und damit guten Federeigenschaften, wie sie für Brillen gefordert werden. Darüber hinaus werden Härtewerte von Uber 300 HV10 erhalten. Die Legierung ist darüber hinaus hoch korrosionsbeständig. Dieser Draht aus einer Cu-Ti-Mn-Legierung weist weiter bessere Verarbeitungseigenschaften als nickelhaltige Drähte auf.

Der erfindungsgemäße Vorteil der Aushärtung, durch eine abschließende Wärmebehandlung, die vorteilhaft nach dem Löten erfolgt, besteht darin, dass der Draht vor der abschließenden Wärmebehandlung zu Teilen eines Brillengestelles verformt wird, wobei die guten Verarbeitungseigenschaften des Drahtes zum Tragen kommen. Anschließend wird der verformte Draht bzw. die Einzelteile des Brillengestelles durch die finale Wärmebehandlung ausgehärtet. Die Einzelteile des Brillengestelles erhalten so eine höhere Festigkeit und bessere Federeigenschaften. Diese sind beispielsweise für die Herstellung von Sportbrillen vorteilhaft.

Darüber hinaus ist die Korrosionsbeständigkeit des Drahtes durch den Mn-Zusatz verbessert, was unter anderem den Vorteil hat, dass der Draht zwischen der Herstellung und dem Auftragen einer abschließenden Oberflächenschicht (Schmuckschicht) des fertigen Brillengestelles nicht korrodiert. Auch Oberflächenbeschädigungen der fertigen Brille führen nicht zu Korrosion.

Ein vorteilhaftes Ausführungsbeispiel enthält 3,5 Gew.-% Ti, 5 Gew.-% Mn und Rest Cu.

Besonders vorteilhaft ist eine Zusammensetzung von 3,5 Gew.-% Ti, 2 Gew.-% Mn und Rest Cu.

## Patentansprüche

1. Draht aus einer CuTi-Legierung für Brillengestelle,
**dadurch gekennzeichnet, dass** der Draht aushärtbar ist und aus 2 bis 5 Gew.-% Ti, 0,5 bis 10 Gew.-% Mn und Rest Cu besteht.

2. Draht nach Anspruch 1, **dadurch gekennzeichnet, dass** der Draht 3,5 Gew.-% Ti, 2 Gew.-% Mn enthält.

3. Draht nach Anspruch 1, **dadurch gekennzeichnet, dass** der Draht 3,5 Gew.-% Ti, 5 Gew.-% Mn enthält.

## Claims

1. A wire from a CuTi alloy for spectacle frames,
**characterized in that**
the wire is age-hardenable and consists of 2 to 5 wt% Ti, 0.5 to 10 wt% Mn and the remainder Cu.

2. The wire according to Claim 1, **characterized in that** it contains 3.5 wt% Ti, 2 wt% Mn.

3. Wire according to Claim 1, **characterized in that** it contains 3.5 wt% Ti, 5 wt% Mn.

## Revendications

1. Fil pour monture de lunettes en un alliage de Cu-Ti, **caractérisé en ce que** le fil est durcissable et **en ce qu'**il comprend 2 à 5 % en poids de Ti, 0,5 à 10 % en poids de Mn et du Cu pour le reste.

2. Fil selon la revendication 1, **caractérisé en ce que** le fil contient 3,5 % en poids de Ti et 2 % en poids de Mn.

3. Fil selon la revendication 1, **caractérisé en ce que** le fil contient 3,5% en poids de Ti et 5 % en poids de Mn.
